# EUROPÄISCHE PATENTSCHRIFT

(11) **EP 0 528 151 B1**
(45) Veröffentlichungstag und Bekanntmachung des Hinweises auf die Patenterteilung: **13.09.1995**
(21) Anmeldenummer: 92111249.6
(22) Anmeldetag: 02.07.1992
(51) Int. Cl.: B60K 15/077, B65D 88/02, B65D 21/02, B60K 15/00

(54) **Tankaufbau mit einzelnen Tankmodulen, insbesondere für ein Brandschutzfahrzeug**
Tank consisting of separate modules, in particular for fire-fighting vehicles
Réservoir composé de modules separés, en particulier pour véhicule de lutte contre l'incendie

(30) Priorität: 19.07.1991 DE 4123974
(43) Veröffentlichungstag der Anmeldung: 24.02.1993
(73) Patentinhaber: Iveco Magirus Aktiengesellschaft, D-89017 Ulm (DE)
(72) Erfinder: Zawadke, Thomas, W-7834 Herbolzheim 1 (DE); Seidel, Wolfgang, W-7900 Ulm (DE)
(74) Vertreter: TER MEER STEINMEISTER & PARTNER GbR

(56) Entgegenhaltungen:
- CH-A- 482 597
- FR-A- 2 671 542
- NL-A- 8 004 662
- US-A- 3 976 228

## Beschreibung

Die Erfindung betrifft einen Tankaufbau, insbesondere für ein Brandschutzfahrzeug, mit einzelnen Tankmodulen, die zumindest teilweise kommunizierend miteinander verbunden sind.

Die FR-A 2 671 542 zeigt und beschreibt einen aus einzelnen Modulen zusammensetzbaren Behälter. Die Module weisen auf einer Oberfläche einen vorspringenden, rohrförmigen Gewindestutzen mit Außengewinde und auf der gegenüberliegenden Oberfläche eine Öffnung mit entsprechendem Innengewinde auf, so daß jeweils zwei Module zusammengeschraubt weden können und zugleich eine Verbindung zwischen den Innenräumen der Module hergestellt wird. Die Verbindung ist in einer beliebig langen Reihe fortsetzbar.

Aus DE-PS 33 42 871 ist ein Tankaufbau mit modulartig aneinandergereihten Einzeltanks der vorgenannten Art bekannt, wobei die Einzeltanks ebenflächige Behälterwände besitzen und über Verbindungsrohre miteinander verbunden sind. Der Tankaufbau befindet sich auf einem mobilen Kraftfahrzeug. Von Nachteil ist die vergleichsweise aufwendige Montage auf einem Kraftfahrzeug aufgrund der zu montierenden Verbindungsrohre, die zwangsläufig zu erhöhten Undichtigkeitsproblemen führen und insbesondere einen erhöhten Dichtungsaufwand erfordern. Die einzelnen Tanks können nur bis zu einer vergleichsweise kleinen Größe konzipiert sein, da sie keine Schwallwände besitzen und insgesamt aufgrund der planen Begrenzungswände vergleichsweise instabil, d.h. nicht besonders steif sind.

Aufgabe der Erfindung ist die Schaffung eines Tankaufbaus der eingangs genannten Art, der bei einfachem Aufbau und einfacher Montage vielseitig verwendbar und insbesondere auch für größere Tankeinheiten geeignet ist.

Gelöst wird die der Erfindung zugrundeliegende Aufgabe durch die im Anspruch 1 angegebenen Merkmale.

Vorteilhaft weitergebildet wird der Erfindungsgegenstand durch die Merkmale der Unteransprüche 2 bis 11.

Wesen der Erfindung ist, die einzelnen Tankmodule des Tankaufbaus im wesentlichen gleich auszubilden, wobei jeder Tankmodul zumindest eine konvexe Ausbuchtung und eine konkave Einbuchtung besitzt. Die konkave Einbuchtung eines Tankmoduls steht hierbei mit einer konvexen Ausbuchtung eines benachbarten Tankmoduls in einem formschlüssigen Eingriff dergestalt, daß die Tankmodule insbesondere in Vertikalrichtung gestapelt oder in Horizontalrichtung aneinandergereiht sind. Im Bereich des formschlüssigen Eingriffs der benachbarten Modulabschnitte können die Tankmodule kommunizierend miteinander verbunden (verschraubt, verklebt, verspannt mit Gurt, verschweißt etc.) sein.

Zweckmäßigerweise besitzt die Grundfläche eines untersten Tankmoduls des Tankaufbaus eine konvexe Ausbuchtung nach unten, welche mit einer Ablauföffnung ausgebildet ist. Dadurch kann der Tankinhalt gegebenenfalls vollständig entleert werden.

Es ist vorteilhafterweise vorgesehen, daß jede konvexe Ausbuchtung und jede konkave Einbuchtung an zentraler Stelle Flachbereiche besitzt, welche als Blinddeckel, Pumpenanschlußdeckel, Wasserabflußdeckel, Domdeckel oder dergl. ausgebildet sind, wobei einzelne Deckel zu benachbarten Tankmodulen entfernt und als kommunizierende Durchtrittsöffnungen zwischen den Tankmodulen ausgebildet werden können.

Im Bereich um vorgenannte Durchtrittsöffnungen zwischen einzelnen Tankmodulen befindet sich vorzugsweise ein Heizdraht, der in eine Ausbuchtung bzw. Einbuchtung eingelegt, eingelassen, verklebt oder in einer anderen Weise befestigt ist. Der Heizdraht wird nach einem Zusammensetzen der Tankmodule z.B. elektrisch erhitzt, so daß die Oberflächenbereiche benachbarter Tankmodule abdichtend verschmelzen und eine abgedichtete Durchtrittsöffnung zwischen den Tankmodulen hergestellt ist.

Die Tankmodule sind vorzugsweise als Kunststoff-Formteile ausgebildet und insbesondere aus Niederdruck-Polyethylen hohlgeblasene oder aus anderen geeigneten Werkstoffen gefertigte Einzeltanks. Durch den eingelassenen Heizdraht bei anschließender Erhitzung bei einer Endmontage ergibt sich eine einfache zeitsparende Fertigung bzw. Montage, wobei eine absolute Dichtheit der Verbindungsstellen gegeben ist, da eine homogene Verbindung der verschweißten Flächen stattfindet. Die verschweißten Flächen befinden sich bevorzugt an konischen Flächen.

Aufgrund der gleichen Ausbildung der einzelnen Tankmodule können diese kostengünstig beispielsweise durch ein Rotationsschmelzverfahren gefertigt werden. Die konvexen und konkaven Aus- bzw. Einbuchtungsbereiche der Tankmodule tragen wesentlich zur Versteifung eines einzelnen Tanks bei. Erhöht wird die Steifigkeit des gesamten Tankaufbaus ferner durch den formschlüssigen Eingriff der Einzelmodule. Ein gesamter Einzeltankverbund kann mittels Tankband oder Gurt fixiert werden, wobei die Gurtfixierung vorzugsweise in Einbuchtungen der Tankmodule geführt ist.

Ein besonders vielseitig verwendbarer und individuell anpassbarer Tankaufbau ist gegeben, wenn die Tankmodule in ihrer Grundform als Würfel oder Kubus ausgebildet sind, wobei drei Seitenflächen des Würfels mit drei konvexen Ausbuchtungen und die anderen drei Seitenflächen mit konkaven Einbuchtungen versehen sind. Die erstgenannten drei Seitenflächen mit den konvexen Ausbuchtungen liegen bevorzugt in unmittelbarer Nachbarschaft. Ein derartiger Tankaufbau gestattet eine Verbindung von Tankmodulen in allen drei Dimensionen. Nicht benötigte Anschlüsse im Bereich der Ein- bzw. Ausbuchtungen werden entweder durch sog. Blinddeckel verschlossen bzw. für die Pumpe mit Pumpenanschlußdeckel versehen oder mit Wasserablaufdeckeln oder mit Domdeckeln. Besonderer Vorteil ist, mit Blick auf normenspezifische Ausführungen der Tankgrößen einen einzelnen Tankmodul beispielsweise in der Volumengrößenordnung von 600 l zu konzipieren. Durch Zusammenfügen weiterer Module ist jede gewünschte Tankgröße auch nachträglich noch konzipierbar.

Eine weitere Ausführungsvariante kennzeichnet sich durch Tankmodule, die in ihrer Grundform als Quader ausgebildet sind, wobei in den beiden größten Seitenflächen des Quaders die konvexe Ausbuchtung auf der einen und die konkave Einbuchtung auf der anderen Seite ausgebildet ist. Die größte Seitenfläche wird vorzugsweise deshalb gewählt, um die Steifigkeit in dieser Fläche zu erhöhen.

Sämtliche Grundformen der Tankmodule besitzen vorzugsweise abgerundete Kantenbereiche. Diese Bereiche übernehmen zusammen mit den konkaven und konvexen Ein- bzw. Ausbuchtungen die Funktion von Schwallwänden konventioneller Tanks.

Besonderer Vorteil der Erfindung ist die preiswerte Herstellung, da nur ein Grundbehälter in großen Stückzahlen gefertigt werden muß. Durch Unterteilung in einzelne Kammern ergibt sich ein verbessertes fahrdynamisches Verhalten, ähnlich wie bei den bekannten Schwallwänden. Bei einer Beschädigung muß nicht der gesamte Tankaufbau, sondern nur der defekte Tankmodul ausgewechselt werden. In einer Tankanlage eines Fahrzeuges können unterschiedliche Flüssigkeiten transportiert werden, z.B. Wasser und Schaum. Die einzelnen Tankmodule lassen sich im Aufbau unterschiedlich plazieren. Dadurch ist eine bessere Platzausnutzung und Anpassung an den Platzbedarf anderer Ausrüstungsgegenstände möglich. Ferner kann das Gewichtsverteilungsproblem in einem Fahrzeug für ein verbessertes Fahrverhalten leicht gelöst werden. Für eine Tankreinigung eines großen Tankaufbaus muß nicht, wie dies bei vielen großen Einzeltanks der Fall ist, in den Tank eingestiegen werden (Unfallgefahr), sondern die Tankreinigung kann durch mehrere Öffnungen von außen erfolgen. Die konkaven/konvexen Verbindungsstellen zwischen den Tankmodulen sorgen für eine Zentrierung der Einzelteile und schaffen eine satte Verbindung. Besonderer Vorteil jedoch ist, daß keine Verbindungsrohre wie nach dem Stand der Technik zwischen den Tankmodulen vorgesehen sind, so daß sich eine vereinfachte Montage eines Tankaufbaus ergibt. Da keine Verbindungsrohre vorhanden sind, fallen auch weniger mögliche Leckstellen an.

Die Erfindung wird nachfolgend anhand von Ausführungsbeispielen unter Bezugnahme auf die beigefügte Zeichnung näher beschrieben; es zeigen:
- Fig. 1: einen schematischen Tankaufbau mit kubischen Tankmodulen für eine dreidimensionale Gestaltung eines Gesamttanks,
- Fig. 2: einen anderen quaderförmigen Tankmodul in schematischer Stirnansicht,
- Fig. 3: den Tankmodul nach Fig. 2 in einer schematischen Draufsicht,
- Fig. 4: den Tankmodul nach den Fig. 2 und 3 in einer Seitenansicht,
- Fig. 5: einen Tankaufbau mit vertikal gestapelten Einzelmodulen gemäß Fig. 2, und
- Fig. 6: die Verbindungsstelle zwischen benachbarten kubusartigen Tankmodulen gemäß Fig. 1.

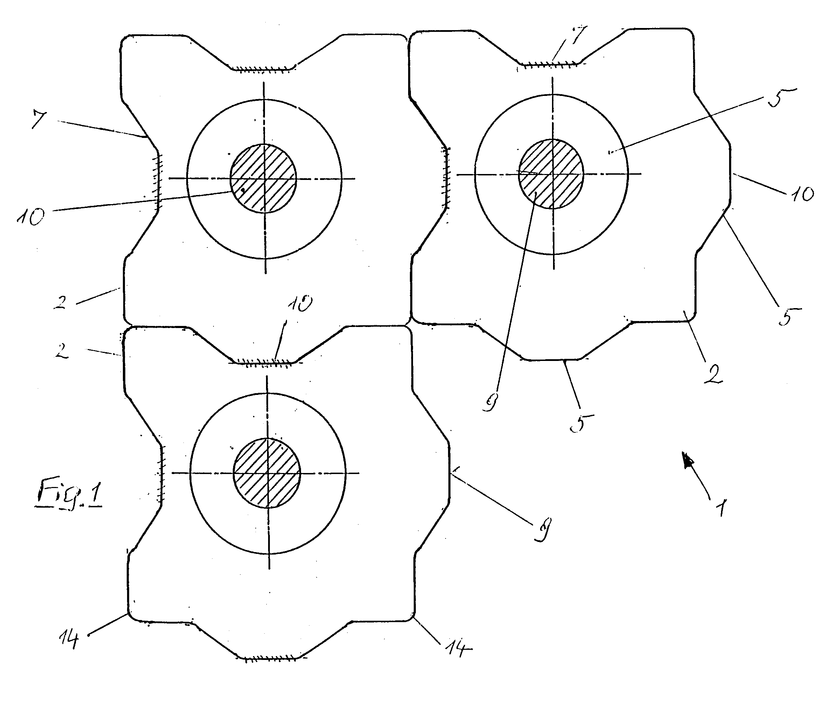

In Fig.1 ist ein möglicher Tankaufbau 1, bestehend aus drei identischen Tankmodulen 2, veranschaulicht. Jeder einzelne Tankmodul 2 ist in seiner Grundform als Würfel oder Kubus mit abgerundeten Kantenbereichen 14 ausgestaltet. Jeder Tankmodul 2 besitzt ferner an drei unmittelbar benachbarten Seitenflächen an zentraler Stelle eine konvexe Ausbuchtung 5 sowie an den restlichen drei Seitenwänden an zentraler Stelle eine konkave Einbuchtung 7. Ausbuchtung 5 und Einbuchtung 7 entsprechen einander, besitzen einen konischen Umfangsbereich und haben an zentraler Stelle einen runden Flachbereich 9.

Ausbuchtung 5 und Einbuchtung 7 sind hierbei so getroffen, daß bei direkter Anlage zweier kubusartiger Tankmodule 2 ein formschlüssiger Eingriff zwischen den Tankmodulen und mithin ein satter zentrierter Eingriff gegeben ist. Da Ausbuchtung 5 und Einbuchtung 7 jeweils an zentraler Stelle in der Mitte einer Seitenfläche des Würfels liegen, sind die einzelnen Tankmodule 2 sowohl in der Höhe stapelbar als auch nebeneinander in direkter Anlage in Kompaktbauweise aneinanderreihbar.

Die zentralen Flachbereiche 9 sind sog. Blinddeckel, Domdeckel, Wasserablaufdeckel, oder ein Pumpenanschlußdeckel. Der Deckel 10 kann gegebenenfalls entfernt bzw. ein Loch herausgeschnitten oder geschweißt werden, so daß einzelne benachbarte Tankmodule 2 kommunizierend miteinander verbunden werden können, beispielsweise bei einem größeren Tankaufbau, welcher für eine einzige Flüssigkeit vorgesehen ist. Die Seitenwandbereiche der Würfel, welche die Durchtrittsöffnungen enthalten, dienen hierbei als Schwallwände, wenn der Tankaufbau 1 für ein Fahrzeug, insbesondere als Behälteranlage für ein Brandschutzfahrzeug vorgesehen ist. Aufgrund der direkten kommunizierenden Verbindung zwischen den einzelnen Tankmodulen 2 entfallen die Verbindungsrohre wie nach dem Stand der Technik, und es läßt sich der gesamte Tankaufbau 1 sehr kompakt mit hoher Steifigkeit gestalten.

Die einzelnen kubusartigen Tankmodule 2 sind Kunststoff-Formteile, insbesondere aus Niederdruck-Polyethylen hohlgeblasene oder aus anderen geeigneten Werkstoffen gefertigte Einzeltanks, die baukastenähnlich unterschiedlich große Tankanlagen zulassen. Mit Blick auf Normen-spezifische Ausführungen der Tankgrößen (600 l, 1200 l, 1800 l, 2400 l, 4800 l) erfolgt die Projektierung eines Moduls mit 600 l Inhalt, der durch Zusammenfügen mit weiteren Modulen auf die gewünschte Tankgröße erweiterbar ist.

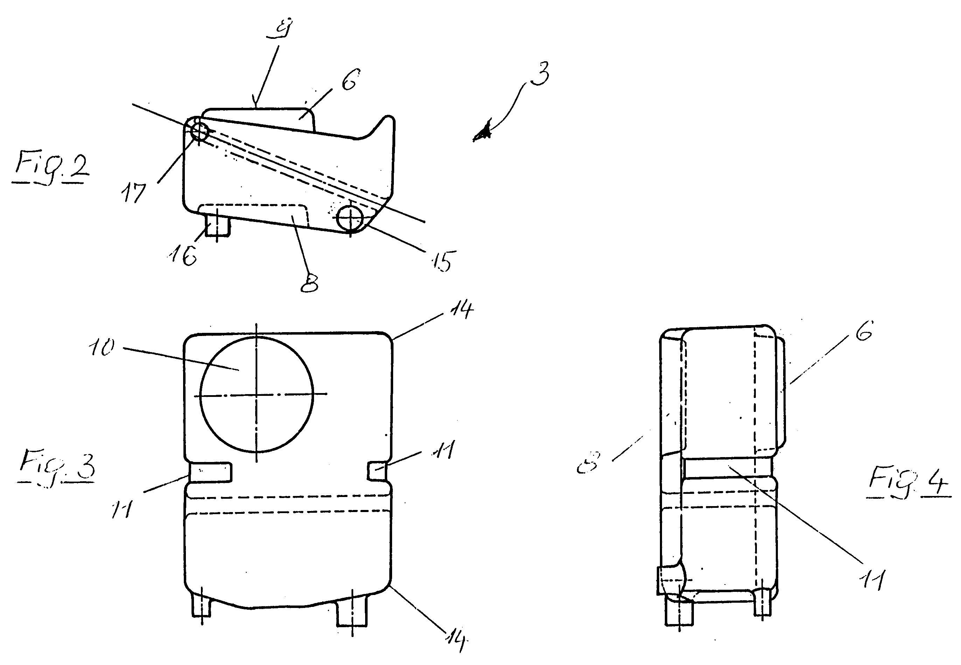

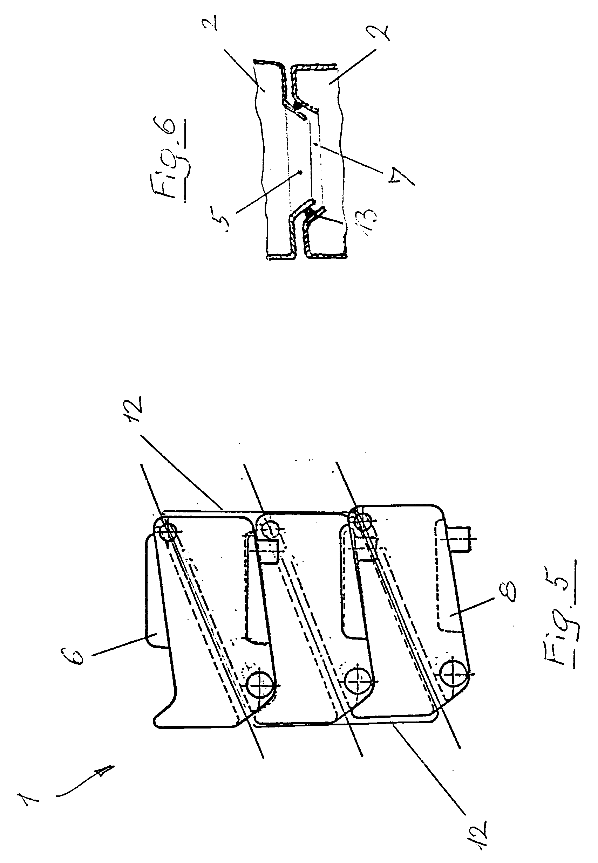

Die Ausführungsvariante nach den Fig. 2 bis 5 sieht einzelne gleich ausgebildete Tankmodule 3 vor, deren Grundform ein Quader mit abgerundeten Kantenbereichen 14 ist. Die größten Seitenflächen des Quaders sind hierbei mit einer konvexen Ausbuchtung 6 auf der einen und mit einer konkaven runden Einbuchtung 8 auf der anderen Seite ausgebildet, die formschlüssig bei benachbarten Tankmkodulen 3 zueinanderpassen und einen satten stapelbaren Eingriff gemäß Fig. 5 eines Tankaufbaus 1 ermöglichen.

Jeder einzelne Tankmodul 3 besitzt Gurtfixierungs-Einbuchtungen 11, in welchen ein Tankband oder Gurt 12 für eine Gesamtbefestigung eines Tankaufbaus 1 aufgenommen werden kann. Der Tankaufbau 1 gemäß Fig. 5 kann in einer Endmontage beispielsweise auf einem Fahrzeug stehend oder liegend angeordnet sein.

Jeder Tankmodul 3 gemäß den Fig. 2 bis 5 besitzt ferner einen Pumpenabgang bzw. Überlauf 15, einen Überlauf bzw. Pumpenablauf 16 sowie einen Tankeingang oder Pumpenabgang 17.

Gemäß Fig. 6 ist im Bereich der Konvexen Ausbuchtung und/oder der konkaven Einbuchtung ein in sich geschlossener Heizdraht 13 um eine Deckelausbildung eingelegt, eingegossen, verklebt oder dgl befestigt.

Alle in der Beschreibung erwähnten und/oder in der Zeichnung dargestellten neuen Merkmale allein oder in sinnvoller Kombination sind erfindungswesentlich, auch soweit sie in den Ansprüchen nicht ausdrücklich beansprucht sind.

## Patentansprüche (Patentansprüche für folgende(n) Vertragsstaat(en): AT, DE, GB, IT)

1. Tankaufbau (1), insbesondere für ein Brandschutzfahrzeug, mit einzelnen Tankmodulen (2 bzw. 3), die zumindest teilweise kommunizierend miteinander verbunden sind,
dadurch gekennzeichnet,
daß die Tankmodule (2 bzw. 3) im wesentlichen gleich ausgebildet sind und jeder Tankmodul (2 bzw. 3) zumindest eine konvexe Ausbuchtung (4 bzw. 5) und eine konkave Einbuchtung (7 bzw. 8) besitzt, wobei die konkave Einbuchtung (7 bzw. 8) eines Tankmoduls (2 bzw. 3) mit der konvexen Ausbuchtung (5 bzw. 6) eines anderen Tankmoduls, der bezüglich des ersten Tankmoduls vertikal stapelbar oder horizontal aneinander reihbar ist, in einem formschlüssigen Eingriff steht und im Bereich des formschlüssigen Eingriffs kommunizierend miteinander verbunden werden kann.

2. Tankaufbau nach Anspruch 1,
dadurch gekennzeichnet,
daß die Grundfläche des untersten Tankmoduls eine konvexe Ausbuchtung besitzt, welche mit einer Ablauföffnung ausgebildet ist.

3. Tankaufbau nach Anspruch 1 oder 2,
dadurch gekennzeichnet,
daß jede konvexe Ausbuchtung und jede konkave Einbuchtung Flachbereiche (9) besitzt, welche als Blinddeckel, Pumpenanschlußdeckel, Wasserabflußdeckel, Domdeckel oder dergl. ausgebildet sind, wobei einzelne Deckel (10) zwischen benachbarten Tankmodulen entfernbar sind und Öffnungen zwischen den Tankmodulen ausgebildet werden können.

4. Tankaufbau nach einem der Ansprüche 1 bis 3,
dadurch gekennzeichnet,
daß die Tankmodule Gurtfixierungs-Einbuchtungen (11) aufweisen.

5. Tankaufbau nach einem der Ansprüche 1 bis 4,
dadurch gekennzeichnet,
daß einzelne verbundene Tankmodule mittels Tankband oder Gurt (12) miteinander befestigt sind, wobei das Band bzw. der Gurt in der Gurtfixierungs-Einbuchtung (11) geführt ist.

6. Tankaufbau nach einem der Ansprüche 1 bis 5,
dadurch gekennzeichnet,
daß die Tankmodule (2) in ihrer Grundform als Würfel oder Kubus ausgebildet sind, wobei die Seitenflächen des Würfels mit drei konvexen Ausbuchtungen (5) und die anderen drei Seitenflächen mit konkaven Einbuchtungen (7) versehen sind (Fig. 1).

7. Tankaufbau nach Anspruch 6,
dadurch gekennzeichnet,
daß drei benachbarte Seitenflächen des Würfels mit konvexen Ausbuchtungen (5) und die anderen drei Seitenflächen mit konkaven Einbuchtungen (7) versehen sind.

8. Tankaufbau nach einem der Ansprüche 1 bis 5,
dadurch gekennzeichnet,
daß die Tankmodule (3) in ihrer Grundform als Quader und in den beiden größten Seitenflächen des Quaders die konvexe Ausbuchtung (6) bzw. konkave Einbuchtung (8) ausgebildet sind (Fig. 2 bis 5).

9. Tankaufbau nach einem der Ansprüche 3 bis 8,
dadurch gekennzeichnet,
daß im Bereich der konvexen Ausbuchtung und/oder der konkaven Einbuchtung ein in sich geschlossener Heizdraht (13) um eine Deckelausbildung eingelegt, eingegossen, verklebt oder dergl. befestigt ist (Fig.6).

10. Tankaufbau nach einem der Ansprüche 1 bis 9,
dadurch gekennzeichnet,
daß die Tankmodule (2 bzw. 3) als Kunststoff-Formteile ausgebildet sind.

11. Tankaufbau nach einem der Ansprüche 1 bis 10,
dadurch gekennzeichnet,
daß die Grundform der Tankmodule (2 bzw. 3) abgerundete Kantenbereiche (14) aufweist.

## Patentansprüche (Patentansprüche für folgende(n) Vertragsstaat(en): FR)

1. Tankaufbau (1), insbesondere für ein Brandschutzfahrzeug, mit einzelnen Tankmodulen (2 bzw. 3), die zumindest teilweise kommunizierend miteinander verbunden sind, wobei
die Tankmodule (2 bzw. 3) im wesentlichen gleich ausgebildet sind und jeder Tankmodul (2 bzw. 3) zumindest eine konvexe Ausbuchtung (4 bzw. 5) und eine konkave Einbuchtung (7 bzw. 8) besitzt, wobei die konkave Einbuchtung (7 bzw. 8) eines Tankmoduls (2 bzw. 3) mit der konvexen Ausbuchtung (5 bzw. 6) eines anderen Tankmoduls, der bezüglich des ersten Tankmoduls vertikal stapelbar und/oder horizontal aneinander reihbar ist, in einem formschlüssigen Eingriff steht und im Bereich des formschlüssigen Eingriffs kommunizierend miteinander verbunden werden kann, und wobei
jede konvexe Ausbuchtung und jede konkave Einbuchtung Flachbereiche (9) besitzt, welche als Blinddeckel, Pumpenanschlußdeckel, Wasserabflußdeckel, Domdeckel oder dergl. ausgebildet sind, wobei einzelne Deckel (10) zwischen benachbarten Tankmodulen entfernbar sind und Öffnungen zwischen den Tankmodulen ausgebildet werden können.

2. Tankaufbau nach Anspruch 1,
dadurch gekennzeichnet,
daß die Grundfläche des untersten Tankmoduls eine konvexe Ausbuchtung besitzt, welche mit einer Ablauföffnung ausgebildet ist.

3. Tankaufbau nach einem der Ansprüche 1 und 2,
dadurch gekennzeichnet,
daß die Tankmodule Gurtfixierungs-Einbuchtungen (11) aufweisen.

4. Tankaufbau nach einem der Ansprüche 1 bis 3,
dadurch gekennzeichnet,
daß einzelne verbundene Tankmodule mittels Tankband oder Gurt (12) miteinander befestigt sind, wobei das Band bzw. der Gurt in der Gurtfixierungs-Einbuchtung (11) geführt ist.

5. Tankaufbau nach einem der Ansprüche 1 bis 4,
dadurch gekennzeichnet,
daß die Tankmodule (2) in ihrer Grundform als Würfel oder Kubus ausgebildet sind, wobei die Seitenflächen des Würfels mit drei konvexen Ausbuchtungen (5) und die anderen drei Seitenflächen mit konkaven Einbuchtungen (7) versehen sind (Fig. 1).

6. Tankaufbau nach Anspruch 5,
dadurch gekennzeichnet,
daß drei benachbarte Seitenflächen des Würfels mit konvexen Ausbuchtungen (5) und die anderen drei Seitenflächen mit konkaven Einbuchtungen (7) versehen sind.

7. Tankaufbau nach einem der Ansprüche 1 bis 4,
dadurch gekennzeichnet,
daß die Tankmodule (3) in ihrer Grundform als Quader und in den beiden größten Seitenflächen des Quaders die konvexe Ausbuchtung (6) bzw. konkave Einbuchtung (8) ausgebildet sind (Fig. 2 bis 5).

8. Tankaufbau nach einem der Ansprüche 2 bis 7,
dadurch gekennzeichnet,
daß im Bereich der konvexen Ausbuchtung und/oder der konkaven Einbuchtung ein in sich geschlossener Heizdraht (13) um eine Deckelausbildung eingelegt, eingegossen, verklebt oder dergl. befestigt ist (Fig.6).

9. Tankaufbau nach einem der Ansprüche 1 bis 8,
dadurch gekennzeichnet,
daß die Tankmodule (2 bzw. 3) als Kunststoff-Formteile ausgebildet sind.

10. Tankaufbau nach einem der Ansprüche 1 bis 9,
dadurch gekennzeichnet,
daß die Grundform der Tankmodule (2 bzw. 3) abgerundete Kantenbereiche (14) aufweist.

## Claims (Claims for the following Contracting State(s): AT, DE, GB, IT)

1. A tank structure (1), in particular for a fire-protecton vehicle, with individual tank modules (2 or 3) which are interconnected so as to be at least partly communicating, characterised in that the tank modules (2 or 3) are of substantially like design and each tank module (2 or 3) has at least one convex bulge (4 or 5) and a concave recess (7 or 8), wherein the concave recess (7 or 8) of a first tank module (2 or 3) is in form-locking engagement with the convex bulge (5 or 6) of another tank module which, in relation to the first tank module, can be stacked vertically or strung together horizontally and can be interconnected so as to be in communication in the vicinity of the form-locking engagement.

2. A tank structure according to Claim 1, characterized in that the base area of the lowermost tank module has a convex bulge which is formed with an outlet opening.

3. A tank structure according to Claim 1 or 2, characterised in that each convex bulge and each concave recess has flat regions (9) which are in the form of blank covers, pump-connection covers, water-outflow covers, dome covers or the like, wherein individual covers (10) can be removed between adjacent tank modules and openings can be formed between the tank modules.

4. A tank structure according to any one of Claims 1 to 3, characterised in that the tank modules have strap-fixing indentations (11).

5. A tank structure according to any one of Claims 1 to 4, characterised in that individually connected tank modules are fastened together by means of a tank belt or strap (12), wherein the belt or strap is guided in the strap-fixing indentation (11).

6. A tank structure according to any one of Claims 1 to 5, characterised in that in their basic form the tank modules (2) are in the form of a cube, wherein the lateral surfaces of the cube are provided with three convex bulges (5) and the other lateral surfaces are provided with concave recesses (7) (Figure 1).

7. A tank structure according to Claim 6, characterised in that three adjacent lateral surfaces of the cube are provided with convex bulges (5) and the other three lateral surfaces are provided with concave recesses (7).

8. A tank structure according to any one of Claims 1 to 5, characterised in that in their basic form the tank modules (3) are in the form of a parallelepiped and the convex bulge (6) or the concave recess (8) are formed in the two largest lateral surfaces of the parallelepiped (Figures 2 to 5).

9. A tank structure according to any one of Claims 3 to 8, characterised in that in the vicinity of the convex bulge and/or the concave recess a self-contained heating wire (13) is secured, fitted, integrally cast, bonded or the like around a cover construction (Figure 6).

10. A tank structure according to any one of Claims 1 to 9, characterised in that the tank modules (2 or 3) are formed as moulded plastics parts.

11. A tank structure according to any one of Claims 1 to 10, characterised in that the basic form of the tank modules (2 or 3) has rounded edge zones (14).

## Claims (Claims for the following Contracting State(s): FR)

1. A tank structure (1), in particular for a fire-protecton vehicle, with individual tank modules (2 or 3) which are interconnected so as to be at least partly communicating, wherein the tank modules (2 or 3) are of substantially like design and each tank module (2 or 3) has at least one convex bulge (4 or 5) and a concave recess (7 or 8), wherein the concave recess (7 or 8) of a first tank module (2 or 3) is in form-locking engagement with the convex bulge (5 or 6) of another tank module which, in relation to the first tank module, can be stacked vertically and/or strung together horizontally and can be interconnected so as to be in communication in the vicinity of the form-locking engagement, and wherein each convex bulge and each concave recess has flat regions (9) which are in the form of blank covers, pump-connection covers, water-outflow covers, dome covers or the like, wherein individual covers (10) can be removed between adjacent tank modules and openings can be formed between the tank modules.

2. A tank structure according to Claim 1, characterised in that the base area of the lowermost tank module has a convex bulge which is formed with an outlet opening.

3. A tank structure according to either of Claims 1 and 2, characterised in that the tank modules have strap-fixing indentations (11).

4. A tank structure according to any one of Claims 1 to 3, characterised in that individually connected tank modules are fastened together by means of a tank belt or strap (12), wherein the belt or strap is guided in the strap-fixing indentation (11).

5. A tank structure according to any one of Claims 1 to 4, characterised in that in their basic form the tank modules (2) are in the form of a cube, wherein the lateral surfaces of the cube are provided with three convex bulges (5) and the other lateral surfaces are provided with concave recesss (7) (Figure 1).

6. A tank structure according to Claim 5, characterised in that three adjacent lateral surfaces of the cube are provided with convex bulges (5) and the other three lateral surfaces are provided with concave recesses (7).

7. A tank structure according to any one of Claims 1 to 4, characterised in that in their basic form the tank modules (3) are in the form of a parallelepiped and the convex bulge (6) or the concave recess (8) are formed in the two largest lateral surfaces of the parallelepiped (Figures 2 to 5).

8. A tank structure according to any one of Claims 2 to 7, characterised in that in the vicinity of the convex bulge and/or the concave recess a self-contained heating wire (13) is secured, fitted, integrally cast, bonded or the like around a cover construction (Figure 6).

9. A tank structure according to any one of Claims 1 to 8, characterised in that the tank modules (2 or 3) are formed as moulded plastics parts.

10. A tank structure according to any one of Claims 1 to 9. characterised in that the basic form of the tank modules (2 or 3) has rounded edge zones (14).

## Revendications (Revendications pour l'(les) Etat(s) contractant(s) suivant(s): AT, DE, GB, IT)

1. Réservoir (1) composé de modules notamment de modules de réservoir séparés (2, 3) pour un véhicule de lutte contre l'incendie, ces modules étant reliés de manière à communiquer au moins partiellement,
caractérisé en ce que les modules (2, 3) étant réalisés de manière essentiellement identique et chaque module de réservoir (2, 3) comporte au moins une déformation convexe (4, 5) et une déformation concave (7, 8), la déformation concave (7, 8) d'un module de réservoir (2, 3) étant en prise avec la déformation convexe (5, 6) d'un autre module de réservoir qui est empilable verticalement par rapport au premier module de réservoir ou juxtaposable horizontalement, par une prise avec une liaison par la forme et au niveau de la prise avec liaison par la forme les modules peuvent être reliés pour communiquer.

2. Réservoir composé selon la revendication 1,
caractérisé en ce que la surface de base du module de réservoir le plus bas possède une déformation convexe munie d'une ouverture de sortie.

3. Réservoir selon les revendications 1 ou 2,
caractérisé en ce que chaque déformation convexe et chaque déformation concave possède des zones plates (9) réalisées comme couvercles aveugles, couvercles de raccordement de pompe, couvercles d'évacuation d'eau, couvercle formant dôme ou analogues et les différents couvercles (10) entre les modules de réservoir voisins peuvent s'enlever et former des ouvertures entre les modules de réservoir.

4. Réservoir composé selon l'une des revendications 1 à 3,
caractérisé en ce les modules de réservoir comportent des cavités (11) pour la fixation de ceinture.

5. Réservoir composé selon l'une des revendications 1 à 4,
caractérisé en ce que les différents modules de réservoir sont fixés en étant reliés par une ceinture (12) ou un cerclage de réservoir, la ceinture ou le cerclage passant par des cavités de fixation de réservoir (11).

6. Réservoir composé l'une des revendications 1 à 5,
caractérisé en ce que les modules de réservoir (2) ont une forme de base en dé ou en cube et les surfaces latérales du cube comportent trois déformations convexes (5) et les trois autres surfaces latérales comportent des déformations concaves (7) (figures 1).

7. Réservoir composé selon la revendication 6,
caractérisé en ce que trois surfaces latérales voisines du cube comportent des déformations convexes (5) et les autres surfaces latérales comportent des déformations concaves (7).

8. Réservoir composé selon l'une des revendications 1 à 5,
caractérisé en ce que les modules de réservoir (3) ont une forme de base parallélépipédique et les deux surfaces latérales les plus grandes du parallélépipède comportent les déformations convexes (6) ou les déformations concaves (8) (figures 2 à 5).

9. Réservoir composé selon l'une des revendications 3 à 8,
caractérisé en ce qu'au niveau des déformations convexes et/ou des déformations concaves, il y a un fil chauffant (13) emprisonné, qui entoure une réalisation de couvercle, ce fil étant intégré au moulage, collé ou fixé de manière analogue (figure 6).

10. Réservoir composé selon l'une des revendication 1 à 9,
caractérisé en ce que les modules (2 et 3) sont des pièces moulées en matière plastique.

11. Réservoir composé selon l'une des revendications 1 à 10,
caractérisé en ce que la forme de base des modules de réservoir (2, 3) comporte des zones d'arête (14) arrondies.

## Revendications (Revendications pour l'(les) Etat(s) contractant(s) suivant(s): FR)

1. Réservoir (1) composé de modules notamment de modules de réservoir séparés (2, 3) pour un véhicule de lutte contre l'incendie, ces modules étant reliés de manière à communiquer au moins partiellement,
- les modules (2, 3) étant réalisés de manière essentiellement identique et chaque module de réservoir (2, 3) comporte au moins une déformation convexe (4, 5) et une déformation concave (7, 8), la déformation concave (7, 8) d'un module de réservoir (2, 3) étant en prise avec la déformation convexe (5, 6) d'un autre module de réservoir qui est empilable verticalement par rapport au premier module de réservoir et/ou juxtaposable horizontalement, par une prise avec une liaison par la forme et au niveau de la prise avec liaison par la forme les modules peuvent être reliés pour communiquer,
- et chaque déformation convexe et chaque déformation concave possède des zones plates (9) réalisées comme couvercles aveugles, couvercles de raccordement de pompe, couvercles d'évacuation d'eau, couvercle formant dôme ou analogues et les différents couvercles (10) entre les modules de réservoir voisins peuvent s'enlever et former des ouvertures entre les modules de réservoir.

2. Réservoir composé selon la revendication 1,
caractérisé en ce que la surface de base du module de réservoir le plus bas possède une déformation convexe munie d'une ouverture de sortie.

3. Réservoir composé selon l'une des revendica
tions 1 et 2, caractérisé en ce les modules de réservoir comportent des cavités (11) pour la fixation de ceinture.

4. Réservoir composé selon l'une des revendications 1 à 3,
caractérisé en ce que les différents modules de réservoir sont fixés en étant reliés par une ceinture (12) ou un cerclage de réservoir, la ceinture ou le cerclage passant par des cavités de fixation de réservoir (11).

5. Réservoir composé l'une des revendications 1 à 4,
caractérisé en ce que les modules de réservoir (2) ont une forme de base en dé ou en cube et les surfaces latérales du cube comportent trois déformations convexes (5) et les trois autres surfaces latérales comportent des déformations concaves (7) (figures 1).

6. Réservoir composé selon la revendication 5, caractérisé en ce que trois surfaces latérales voisines du cube comportent des déformations convexes (5) et les autres surfaces latérales comportent des déformations concaves (7).

7. Réservoir composé selon l'une des revendications 1 à 4,
caractérisé en ce que les modules de réservoir (3) ont une forme de base parallélépipédique et les deux surfaces latérales les plus grandes du parallélépipède comportent les déformations convexes (6) ou les déformations concaves (8) (figures 2 à 5).

8. Réservoir composé selon l'une des revendications 2 à 7,
caractérisé en ce qu'au niveau des déformations convexes et/ou des déformations concaves, il y a un fil chauffant (13) emprisonné, qui entoure une réalisation de couvercle, ce fil étant intégré au moulage, collé ou fixé de manière analogue (figure 6).

9. Réservoir composé selon l'une des revendication 1 à 8,
caractérisé en ce que les modules (2 et 3) sont des pièces moulées en matière plastique.

10. Réservoir composé selon l'une des revendications 1 à 9,
caractérisé en ce que la forme de base des modules de réservoir (2, 3) comporte des zones d'arête (14) arrondies.
